# EUROPEAN PATENT SPECIFICATION

(11) **EP 4 157 656 B1**
(45) Date of publication and mention of the grant of the patent: **02.04.2025**
(21) Application number: 21727346.5
(22) Date of filing: 14.05.2021
(51) Int. Cl.: B60H 1/00, B60H 1/32, B60L 1/02, B60L 58/13, B60L 58/22, F25B 27/00, F25D 29/00, B60L 53/80, B60L 58/21

(54) **ELECTRIC MOBILE REFRIGERATION UNIT**
ELEKTRISCHE MOBILE KÜHLEINHEIT
UNITÉ DE RÉFRIGÉRATION MOBILE ÉLECTRIQUE

(30) Priority: 02.06.2020 GB 202008254
(43) Date of publication of application: 05.04.2023
(73) Proprietor: Sunswap Ltd., Leatherhead KT22 7BA (GB)
(72) Inventor: LOWE, Michael, London SE1 0NZ (GB); SUCIS, Andrew, London SE1 0NZ (GB); TAUBER, Nikolai, London SE1 0NZ (GB)
(74) Representative: Beck Greener LLP
(86) International application number: PCT/EP2021/062825
(87) International publication number: WO 2021/244832

(56) References cited:
- EP-A1- 3 536 552
- WO-A1-2015/138194
- US-A1- 2011 114 398
- US-A1- 2018 056 769
- US-B1- 9 630 614

## Description

The present invention relates to electric mobile refrigeration units, and related software, systems and methods for deploying and managing such units.

Mobile refrigeration units are known in various industries. For instance, Transport Refrigeration Units (TRUs) play an important role for the food distribution industry in delivering fresh, frozen, and other perishable food from field to market, typically from food processors to wholesale distribution hubs and/or refrigerated storage, and then onto retail and food service industries. These are found used with small rigid vans right through to articulated trucks pulling a refrigerated container. Often, a TRU may be used with a tractor unit pulling a semi-trailer, where the TRU is added to a specially designed and insulated trailer according to a particular customer's specifications. The TRU typically consists of four primary components for the refrigeration cycle: evaporator, compressor, condenser, and expansion valve. When the compressor is driven, these combine to chill air in the interior of the trailer to cool the contents. The capacity chosen for the refrigeration unit is highly dependent on the size of the trailer and the commodity that will be hauled. For a typical trailer, the refrigeration unit's capacity can range from less than 5kW to more than 15kW. A TRU's capacity is generally sized 50% larger than required to allow rapid temperature pull-down when the trailer is first loaded. Without this additional pull-down capacity, trailers would have to be precooled.

Currently most TRUs are diesel driven, particularly when used with trailers. These typically use a small diesel engine to mechanically drive a compressor and power fans required for air distribution within the trailer. The period that the unit can operate on a payload of fuel depends on a number of variables such as ambient conditions, trailer design, and load requirements. Such units are well established in the industry. Nonetheless, diesel-powered TRUs have a number of drawbacks including noise and exhaust emissions. This is a particular problem, as the engine must be designed to have the power capacity to meet the pull-down requirements, i.e. chilling the interior and the contents down to the desired set point temperature, which is more power than is typically required during normal operation on the road to maintain that temperature. It is difficult to optimise a single engine to suit all possible cooling requirements. Due to these drawbacks, these units are facing a number of operational restrictions, especially during deliveries in large cities. Regulations such as ULEZ mean fleet operators need a clean, efficient solution.

Another technology is called "direct-drive", where the diesel engine of the tractor unit is also used to power the compressor of the refrigeration unit. The tractor unit engine is typically cleaner and more efficient than the small separate diesel engines used in TRUs. A hydraulic motor or electric motor may be used to couple power from the tractor engine to the compressor.

To address the inefficiencies associated with regular diesel-driven TRUs, manufacturers have developed "hybrid" diesel-electric units and other alternative technologies that incorporate electric power. Many hybrid units supplement the primary diesel engine with additional electric motors that allow the diesel engine to be switched off when the unit is plugged into grid-based electricity (shore power). This is referred to as "standby" operation. The electric motor is typically sufficient to maintain the desired set point cooling temperature when in standby operation, but does not have sufficient capacity to pull down the temperature to the desired set point.

In some hybrid examples, the diesel engine and the electric motor are mechanically coupled to the compressor "in parallel" via a belt or clutch mechanism that can selectively engage either power source as required.

In other hybrid examples, the diesel engine is used to produce AC power via an alternator/generator which is connected "in series" with an AC motor which drives the compressor. In most units the AC motor can be connected to the electricity grid for standby operation.

In a further example, in a direct drive system, the AC motor driving the compressor can be supplied by shore power as well as by AC power generated by the tractor diesel engine. Such units, where there is no separate diesel engine and the compressor is driven only by electrical power, are sometimes called eTRUs (electric TRUs). However, nomenclature is not entirely consistent across the industry, and the term "eTRU" can also be used to refer to units where the compressor is only driven electrically, i.e. via an AC motor, via either shore power or via a diesel engine, but without any mechanical coupling of the diesel engine to the compressor, and/or where the units have sufficient power to meet pull down requirements when operating on either power source.

Some hybrid designs and eTRUs have been proposed using solar/batteries to supplement and/or supplant other power sources in powering the refrigeration unit. However, these have not been readily adopted due to problems in the time taken to charge and manage batteries. Large capacity, expensive batteries are needed to provide capacity for long journeys, even though such journeys may be infrequent, and fast, expensive chargers are needed to provide high availability of the fleet and minimise downtime between journeys.

In one example, EP2528759B1 describes a "series" hybrid TRU arrangement which additionally has solar/battery storage providing power to the compressor via an AC bus. As in known series arrangements, the diesel engine provides the main source of AC power via an alternator/generator to power the AC motor driving the compressor. In addition, a power management system also provides AC power converted from solar panels or a storage battery via an inverter, which can supplement or supplant the diesel engine power. Thus, an AC bus is created with power from either the diesel engine or the power management system. A charger is also connected to the AC bus, such that the battery can be charged from power generated by the diesel engine.

In another example, US9440525B1 describes a "parallel" hybrid TRU arrangement which additionally has solar/battery storage providing power via a DC bus. Here, the diesel engine is mechanically coupled to the compressor in the usual way for parallel designs. In addition, the solar panels and battery also provide power to the DC bus. An inverter on the bus then converts this to AC power to power the AC motor to drive the compressor. The diesel engine also powers a generator which provides DC power to a DC bus for recharging the batteries.

These prior art arrangements therefore only go a little way towards reducing carbon exhaust emissions and noise.

Various other examples of TRUs are described in US10,377,209B2, EP1834818B1 and US8,935,933B1. GB2513944A describes a tractor unit with one or more batteries that are recharged from the diesel engine of the tractor unit, via the vehicle battery pack, and can be used in cooling the trailer unit. WO2019138261 relates to charge management for a battery in a TRU. AC is generated from a diesel engine generator and supplies the compressor motor. AC also fed to battery charger, which provides two isolated DC voltages: a first to recharge a battery unit and a second to power a controller.

US9630614 B1 relates to a modular power plant to provide power for operating a machine from one or more modular batteries. The machine type to be operated may be identified and thresholds for the electrical energy that the batteries may provide to the machine may be dynamically determined. The maximum power output may be varied by varying the number and/or type of modular batteries in accordance with the expected peak power requirements of the machine.

US20110114398 A1, US20180056769 A1, WO2015138194 A1 and EP3536552 A1 discuss other battery systems and battery management systems for vehicles.

The present invention aims to address these and other problems in the prior art.

In a first aspect, the present invention relates to a computer program for manging power requirements of mobile refrigeration units as defined by appended independent claim 1.

Using modelling and prediction of the energy requirements for a journey allows the battery capacity and initial battery charge for a mobile refrigeration unit to be adapted to the journey, such that the journey is not undertaken with unnecessary batteries or charge. This frees up capacity at the depot which can be used to defer or slow down the rate of charging, share battery charge or solar with other refrigeration units and/or export energy to the grid. The software can be used to control one or more mobile refrigeration units to charge their batteries when at the depot, or control charging of batteries that have been swapped out of a refrigeration unit and deposited in a swapping station for charging, as well as instructing an operator when to swap batteries for a journey (or possibly directly causing batteries to be swapped where this is automated).

Determining the number of batteries/charge is challenging in the context of refrigeration applications. In other known battery schemes, for instance a power tool, battery packs may be available in different capacities. Generally, battery size simply scales with time of use of the power tool. However, this is not the case with refrigeration, where multiple factors come into play, such as set point temperature, ambient temperature, length of journey, which do not have a simple linear relationship with required energy. It is therefore challenging to determine the battery capacity without overestimating for safety. The modelling carried out by the preferred embodiment of the invention address this issue and prevent unused battery capacity being provisioned.

The inputs to the model on which the prediction of the energy requirements is made include one or more of the parameters: desired temperature set point; expected weather conditions during the journey; start time of journey; duration of journey; number, times and/or times duration of delivery drops; payload mass and/or type; and the determination takes into account the further input of the initial state of charge of the batteries. Typically, the software may connect to a logistics software program used by the operator to extract inputs such as the temperature set point, route of journey, drops, etc. Weather conditions include factors that influence the performance of the system in cooling the interior to the desired setpoint, such as expected hours of sunlight, which affects solar generation, and ambient temperature, which affects how much cooling is required to maintain the set point temperature. Weather conditions may be obtained from a third-party system. These can be correlated with the time and duration and route of the journey to find the conditions pertaining to a particular journey. The model finds the expected energy requirement to meet the set point temperature given the conditions and payload, and based on this energy requirement calculates the amount of additional energy needed to be stored in the batteries given the initial charge state of the batteries. This can be satisfied by swapping in additional batteries and/or charging the batteries in situ or in a swapping station.

In making the determination, the software gets details of a scheduled journey from the logistics software, and from this identifies a suitable trailer for the journey and the time it is required. By tracking movement of all units across the fleet, the software determines the current status of the units and future status of the units, both in terms of energy usage by the refrigeration units and energy generation by the solar units, as well as energy flows around the system. Solar energy may be preferentially used to charge batteries compared with charging via the grid. Considered across the fleet, the software can determine how much energy is required and when, in view of predicted profiles of energy consumption and energy generation, and determine how and when to charge batteries accordingly. If there is excess energy, energy can be exported to the national grid. Energy prices on the national grid may be taken into account in this decision. This is essentially an optimisation problem, and known approaches may be used to solve it.

A model is generated for each refrigeration unit, as performance may vary according to characteristics of the trailer, e.g. size of trailer, refrigeration system performance, effectiveness of insulation, etc, as well as the input parameters specific to the journey.

In an embodiment the computer program comprises plural digital twins modelling the energy required and the energy available across plural refrigeration units in a fleet of trailers or vehicles, the computer program being arranged to output control signals to optimise the charging of batteries across the fleet.

In an embodiment, the computer program is arranged to output control signals to cause export of surplus electrical energy from a rechargeable battery or solar panel of a TRU to the national electricity grid, or to another rechargeable battery in another TRU charging on the local electricity grid. The computer program may determine energy to be surplus in accordance with the cost of mains electricity.

In an embodiment the modelling comprises tracking movement of all TRUs across the fleet so as to determine the current status of the units and predicting future status of the units including energy consumption by the refrigeration units, energy generation by the solar units and energy flows around the system.

In an embodiment, solar is used preferentially to energy from the electricity grid to recharge batteries.

In an embodiment the computer program interfaces to a logistics program to get the itineraries for the journeys and/or to an online source of weather information.

According to a further aspect of the invention, there is provided a system for charging rechargeable batteries for powering mobile refrigeration units in accordance with appended independent claim 9.

According to another aspect of the present invention, there is provided a refrigeration unit according to appended independent claim 10.

Thus, an electric powered refrigeration unit may be provided using rechargeable batteries such that it can complete a journey without external energy supply (except optionally solar), i.e. without using power from the tractor unit or diesel generators, or at least minimising such use. In embodiments with solar, excess solar may be fed back to reduce diesel consumption.

This addresses the problem of enabling the shift away from solely diesel powered TRUs whilst maintaining operational benefits. Whilst some TRUs are known in the prior art, as referenced above, that incorporate a battery to in part power the TRU, this is typically as a back up to a diesel generator and so ultimately relies predominantly on diesel. Even if the battery in such prior art units was scaled up to a large, fixed battery, this would give rise to a range of secondary issues, including:
- Higher Total Cost of Ownership (TCO) than diesel
- Redundant weight and therefore unnecessary fuel consumption for the tractor unit.
- Redundant battery capacity and therefore unnecessary high capital expenditure
- Long battery charge times
- High grid reliance
- Inability to be redeployed on different delivery cycles (because the capacity is fixed)

There may be a fixed battery or batteries, typically in the main TRU unit, and the capability to fit a series of swappable batteries in for example a skid mounted on the trailer or rigid sided vehicle to capture surplus solar energy and provide power to at least the compressor and optionally other subsystems. The swappable batteries are used to vary the on-vehicle energy capacity depending on the requirements for a particular delivery cycle. A delivery cycle (also known as a "duty cycle") describes the daily pattern of use of the refrigeration system according to the particular itinerary and application assigned to it as it makes journeys/trips delivering refrigerated goods.

There is customer value in buying a TRU with initially small capacity and having the ability to scale in the future. For instance, a logistics company delivers milk at 5 degrees C to a supermarket on a 4 hour round trip in Scotland. This might take 3 battery modules. At a later point, they may contract to deliver ice cream in Malaga over a 12 hour round trip. This would clearly take more energy to provide the necessary refrigeration. The company can thus purchase more storage as and when needed for the fleet.

This minimises the total cost of ownership. It also means the customer is not transporting battery capacity that is not needed. The operator can optimise the site where solar is used to charge. In other schemes, redundant capacity is carried around, which impacts weight, and hence fuel consumption, and capital expenditure.

The battery may also power the fans or other components in the refrigeration system as well as the compressor.

The Power Management System is a collection of converter features in the overall electrical system, being provided by either one package, or as separate components. Primarily, the system converts battery power to suitable power for driving the compressor. This might involve typically inverting DC power to AC power, or converting to DC power at a suitable voltage. The system may also convert power from the solar panels for driving the compressor or charging the battery. This might involve again converting DC power to AC power and/or adjusting for the large variation in voltage level output by solar panels due to the prevailing conditions. The system may also export power to the grid from either source.

In an example of the Power management system having separate components, a power distribution unit is provided comprising a DC bus to which multiple separate power controllers are connected, which in turn perform suitable conversion of power required by the power consuming/providing devices to connect and share power via the DC bus. For instance, the batteries may connect directly to the bus without conversion, whereas a motor controller may convert and provide power to the compressor, and chargers may take solar or grid energy and convert it for charging the batteries.

In an alternative example, "hybrid solar inverter" technology known from the solar power industry may be used for the Power management System, featuring both a regular charger (which rectifies and throttles AC current to a DC battery) and enables DC current to be inverted back into AC to be sold back to the grid. The latter requires matching of the frequencies. In the PV industry the term grid-tie inverter is used to describe when an inverter matches with the grid frequency and feeds energy into the grid. Battery storage is often introduced in PV systems which adds additional converter requirements as energy can flow from and to multiple AC and DC sources and sinks. The solar panels may charge the batteries or provide AC power to the grid. In turn, the batteries (DC) may provide energy to an AC load or store energy for later usage. These converter systems are merely a collection of converter features packaged in one physical unit.

Battery Swapping is applying swapping of multiple batteries on a TRU. Redundant batteries are moved to a charging/swapping station or other TRUs in the fleet. Thus, at least some batteries are configured to be easily accessible and disconnectable by an operator. The swappable batteries are preferably mounted on an on-vehicle racking system which makes it easy for an operative to remove, add or swap batteries both in terms of the mechanical and electrical connections that need to be made. The batteries are preferably received in a slot or similar aperture in the rack and electrically plug into the electrical system via a connector. If required to be removed or added, the swappable batteries can be moved from the on-vehicle racking system to a static charging station. The batteries may be moved using a mechanism which can align with both the on-vehicle racking system and static charging station so this operation can be performed with ease by a single operative. The fixed battery or batteries in contrast may be mounted in a different part of the mobile refrigeration unit, for instance in the housing of the main unit itself, where they are less accessible to operators in normal use and may require dismantling the unit to access the batteries.

In an embodiment, the batteries are battery packs, each comprising multiple battery cells, optionally organised in physical battery modules of plural cells in parallel and/or series. The battery packs may each have an onboard battery management system that monitors and manages the individual cells, for example to balance the battery cells. The battery packs may include one or more contactors, i.e. switches, that can be closed via a control signal to connect the positive and/or negative terminals of the battery to the system, e.g. via the DC bus which connects the batteries with the various power consuming devices (e.g. the compressor) and power producing devices (e.g. solar panels, grid connectors) in the system via (where applicable) their respective power converters. The battery management system may also have communication links, e.g. a CANbus link, by which they can coordinate activity with other devices, e.g. other battery packs, chargers, the system controller. Thus, the system controller can control when the battery packs are connected to the bus, e.g. for delivering power to power consuming devices, e.g. the compressor, and drawing power for recharging.

The use of contactors allows fine control over battery charge/discharge and management of the different batteries in the system, which may of course vary due to the adaptive capacity of having swappable, scalable battery packs. The DC bus may be a high current busbar and part of a power distribution unit (PDU), for instance provided within the TRU main body, also containing switched/non-switched connections, and a CAN to I/O interface circuit to switch the other contactors in the DC PDU.

In an embodiment, each battery management system is configured to sense the voltage level of its battery and communicate with the battery management systems of the other batteries to manage the connection of the battery to the DC bus via its contactor such that the batteries with dissimilar voltages are not connected to the DC bus at the same time. This for instance allows the system to control which batteries are connected to the bus, and hence to each other, simultaneously, and hence manage the differing voltages in the batteries arising through having different States of Charge, by selectively connecting only individual batteries or batteries with similar voltages to avoid some batteries with higher voltages feeding current into other batteries with lower voltages. This may comprise selectively switching between batteries in turn via their contactors so a single battery supplies power to the DC bus at any time. Alternatively, the controller may selectively switch in one or more additional batteries once the voltages of one or more batteries already connected to the DC bus have equalised with the additional batteries such that the additional batteries and already connected batteries are then connected in parallel. Thus, as batteries discharge, their voltages drop and other batteries, which initially have a lower state of charge and thus lower voltage, can safely be connected to the DC bus in parallel with the existing batteries as the voltages equalise.

In an embodiment, the unit comprises at least one solar panel, and optionally plural solar panels, for mounting to the trailer or vehicle, the power management system being arranged to receive DC power from the solar panel(s) for powering the compressor and charging the batteries. The solar panel(s) may be arranged to charge at least one battery of the refrigeration unit. Thus, the roof of the trailer or vehicle may be covered with solar panel(s) providing energy to charge the on-vehicle batteries and run the refrigeration system or feed back to the tractor unit to reduce fuel consumption, or to provide energy to the electricity grid when parked at the depot. The solar panel(s) may be connected to the DC bus, e.g. via charge controllers, to distribute power to the batteries and/or compressor and/or grid connector. The preferred refrigeration unit is thus a so-called "prosumer", i.e. both a consumer (via the refrigeration system) and producer (via solar) of electrical power.

The solar panel (or each panel) may be connected to the power management system via a Maximum Power Point Tracker charge controller preferably including a bock-boost converter arranged to convert DC power from the solar panel to an appropriate voltage for charging the batteries.

The unit may also have a connector for connecting to a local or national electricity grid, wherein electric power from the solar panel or battery may be selectively exported to the connected electricity grid and/or the battery may be selectively charged from the connected electricity grid - either a local grid (i.e. behind the meter at the operator's depot) or the wider national grid. The connector may receive single phase or 3 phase power from the grid and a single directional or bi-directional charger may be provided for each phase or a 3 phase charger may be provided for charging the batteries. The batteries may be charged at a static charging station in situ in the refrigeration unit connected to the grid or via a battery swapping station where the battery is swapped out of the refrigeration unit.

The static charging station is constantly connected to the grid (AC) to charge the batteries or to release surplus energy to the grid for demand side response, grid balancing or other grid connectivity. Both the on-vehicle fixed battery and the series of swappable batteries are connected to the power management system to convert electricity supply to the refrigeration system from DC to AC.

The unit may be arranged to export energy to and/or from the tractor unit. Energy charging/export to/from tractor unit may be as beneficial as grid export/charging. Thus, for instance, excess power on the electrical system may be exported to the tractor unit, e.g. where a hybrid unit, to reduce diesel emissions, unloading the alternator, etc. Supplementary power may be imported from the tractor unit from the alternator and/or via axle re-generation (from the tractor or trailer).

The mobile refrigeration units are primarily described in relation to refrigeration units for vehicles and trailers to cool the payload, i.e. so-called "TRUs - Transport Refrigeration Units", but other embodiments may relate to other mobile cooling/refrigeration solutions, such as air-conditioning units for transportation, etc. Trailers may include semi-trailers for tractor units, "reefer" units, refrigerated shipping containers, etc.

Compared with prior art offerings, the preferred embodiments achieve adequate and adaptive range, cost-competitiveness in equipment cost, zero emissions, and quieter operation.

The preferred embodiments have various advantages. In particular, one advantage relates to limited power grid supply when charging. A fleet of electrical TRUs may require more electrical power than the local power grid can supply. In instances where many TRUs require charging at the same time, the power grid may be unable to meet the demand. The battery swapping scheme of the preferred embodiments solves this problem by allowing slow charging of batteries in the charging station followed by swapping into the refrigeration unit for rapid deployment. Thus, in addition to the batteries in use in TRUs, further batteries are charging in readiness. The overall system therefore typically comprises more batteries than may be expected to be in use in TRUs at any one time.

Further advantages relate to limited charger capacity when charging. A battery charger converts an AC power input to a DC power output. The cost is highly dependent of the power rating. On-board chargers are cheaper than stationary fast-chargers but provide less power. It is not economically viable to provide a high quantity of fast chargers for a fleet, so slow on-board chargers are needed, and they can cause long charge durations.

Further advantages relate to battery cost and redundant capacity. The cost of the battery makes up a large proportion of the cost of an eTRU. In an eTRU with a fixed battery the size is determined by the worst-case scenario (long journey, high ambient temperature, etc). However, the worst-case scenario occurs infrequently, and so battery overcapacity is carried on most journeys causing the battery to be large and expensive.

The unit may be arranged to monitor its usage, and comprising communication means to stream the usage data to a remote software platform, the usage data comprising one or more of: start time of journey; duration of journey; temperature set point; weather during journey; number, times and/or duration of delivery drops; payload mass and/or type; location data; energy usage; and actual temperature profile. The data may be used to model the performance of the refrigeration unit, i.e. the energy needed to achieve the temperature profile, given the other input parameters, so that predictions of energy use for future journeys can be made by inputting the appropriate input variables for the future journey. The data can also give real time feedback to operators of the system or the driver of the vehicle, and/or directly make adjustments to the refrigeration cycle. Energy usage may be any one or more of production, consumption and/or storage of electrical energy in the unit, i.e. solar energy, battery energy flows, energy consumed by the refrigeration unit, etc. Weather conditions may include ambient temperature and/or expected solar. These can be correlated with the times of the journey to estimate the amount of solar energy that will be generated and amount of energy to maintain the set point temperature. Payload mass and/or type affects the amount of cooling required to reach the set point.

In an embodiment, the unit is arranged to receive control signals from a remote software platform for charging the batteries and/or exporting power from the batteries and/or the solar panel to the electricity grid when connected. This may be the main power grid network, or the local grid, e.g. to supply power from the solar panel(s) or batteries of one trailer to another connected to he same local grid.

The unit may include an uninterruptable power supply battery, separate from the batteries powering the refrigeration unit, to power the system controller to control charging of the fixed and swappable batteries. The purpose of this is that the operator can always communicate with the TRU remotely, and it can for instance always monitor the solar energy available and thereby collect as much energy as possible. Thus, where the trailer is idle for a period of time, the controller may still monitor and manage the process of charging the fixed and swappable batteries from available PV.

In an embodiment, the unit comprises plural compressors in parallel, the controller being arranged to cumulatively engage the compressors in pulling down the temperature of the interior to a set point such that the power required remains within the power capability of the power management system.

In another embodiment, the power management system is arranged to deliver AC power to the compressor and the unit further comprising a variable speed drive for driving the compressor, such that the frequency of the AC power is modulated to adjust the power draw and limit the power draw to below the power management systems safe limit.

In embodiments at least one battery is fixed and at least one battery is swappable. Typically, it is unnecessary for all batteries to be swappable, as the unit will always require at least one battery, which can be charged in situ via mains connection or the onboard solar panel. Other batteries may be swappable to achieve the aforementioned advantages of adaptive battery capacity and allowing slow, offline charging.

Preferred embodiments take advantage of the PV power production capabilities of the PV panels, intermittent PV power production and varying energy consumption. The PV power production is usually misaligned with the charging requirements for eTRUs. Energy losses happen in instants where PV power production occurs, but the battery is full. Solar Panels provide energy which in embodiments are used to (i) charge the battery, (ii) power the refrigeration system, (iii) power other TRUs in the fleet in the depot or (v) sell energy to the national grid.

Preferred embodiments may also use idle battery capacity for demand side response. In some cases, the batteries are fully charged, but are not needed for a period of time, so can participate in government demand-side-response schemes, e.g. in response to a demand side response signal from a utility company. Thus, electric power can be provided to the national grid, or charging of batteries deferred, to help the utility balance the network or provide other services.

It will be appreciated that any features expressed herein as being provided "in one example" or "in an embodiment" or as being "preferable" may be provided in combination with any one or more other such features together with any one or more of the aspects of the present invention within the scope of the appended claims.

Embodiments of the present invention will now be described by way of example with reference to the accompanying drawings, in which:
Figure 1 shows a perspective view of an example of a TRU according to an embodiment of the present invention attached to a trailer;
Figure 2 shows a view of the main unit of the TRU of Figure 1;
Figure 3 shows a schematic view of the TRU of Figure 1 part of an overall system for providing and managing a fleet of TRUs;
Figure 4 shows a possible temperature profile for a TRU in operation;
Figure 5 shows an example of the energy prediction system used together with an example of a TRU with a modular compressor system in accordance with an embodiment of the present invention;
Figures 6a, 6b and 6c shows a comparative example of a charging station as part of an overall system for providing managing a fleet of TRUs;
Figure 7 shows an example of a method of using the TRU of Figure 1; and
Figure 8 shows a schematic view of a further example of a TRU according to an embodiment of the invention.

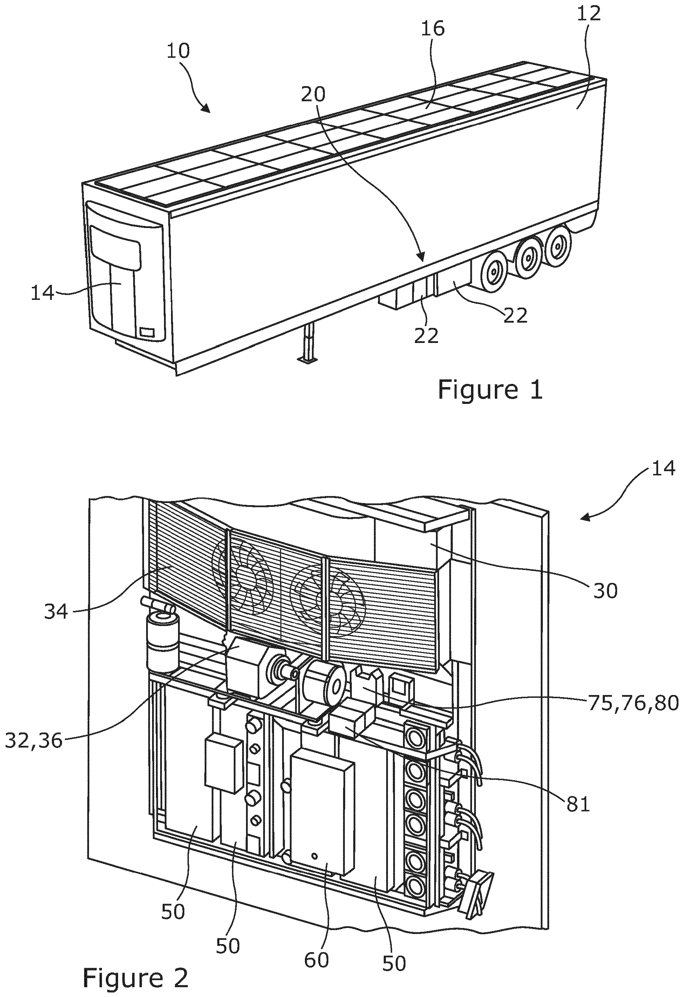

Figure 1 shows a perspective view of an example of a mobile refrigeration unit, more specifically in this example a Transport Refrigeration Unit 10, attached to a semi-trailer 12 of the sort that can be attached to and pulled by a tractor unit (not shown) to transport goods loaded to the interior of the trailer, where the TRU 10 implements a system for refrigerating the interior of the trailer. It will be appreciated that the TRU may equally be attached to other vehicles types, such as rigid body trucks, vans and lorries. As will be described further below, the TRU forms part of an overall system 5 for providing and managing a fleet of TRUs for respective trailers or other vehicles.

The TRU 10 comprises a main refrigeration unit 14, shown in more detail in Figure 2, attached to the near end of the trailer 12 (with the doors allowing access to the interior of the trailer being at the far end), as per known arrangements. The main unit 14 comprises the four primary components for the refrigeration cycle in a vapour compression refrigeration system 29: evaporator 30, compressor 32, condenser 34, and expansion valve 36. When the compressor 32 is driven, these combine to chill air in the interior of the trailer 12 to cool the contents. The refrigeration system may alternatively be mounted in a skid on the front of the trailer, under the trailer chassis, as an over-cab mounted skid on a rigid sided vehicle, or any other mounting arrangement.

The TRU 10 also comprises one or more solar panels 16 attached to the roof of the trailer 12. The solar panels 16 may be low profile, semi-flexible, 20% efficient, polycrystalline panels for instance. These are preferably mounted to the roof of the trailer, but can be mounted at any convenient point. The TRU 10 also comprises a battery rack 20 which receives one or more removable batteries 22 attached to the trailer 12 in an accessible position. This may for instance be attached to one of the I-beams running the length of a standard trailer. More than one rack may be provided, e.g. on both sides of the trailer. The main unit 14 also preferably has one or more fixed battery 50. The fixed battery 50 and removable batteries 22, together with the solar panels 16, provide power the TRU 10. These batteries are preferably battery packs, each comprising multiple individual battery cells monitored and managed by a battery management system in the battery.

The fixed battery or batteries are typically embedded in the TRU in a form in which they are not intended to be removed during operational life of the TRU. In other words, the TRU would need to be dismantled and/or specialist tools and expertise would be needed to access, detach, remove and replace the fixed battery. Hence, these batteries would not normally be removed (except for instance in exceptional cases where, for instance, a battery failed.) On the other hand, the swappable batteries are intended to be regularly and simply accessed, detached, removed and swapped during the life of the TRU according to the requirements of the operator, as discussed below. Thus, the TRU may be put into operation with any number of swappable batteries present in the rack, e.g. with some slots occupied and others vacant.

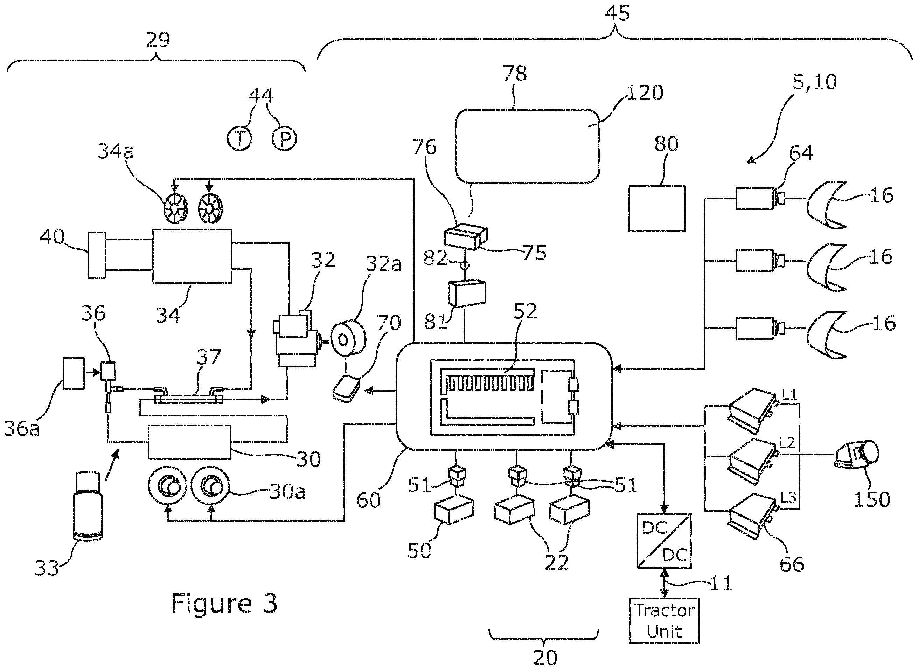

These and other elements of the system 5 and TRU 10 are shown in more detail in the schematic view of Figure 3, showing in particular elements of the refrigeration system/cycle and elements of the electrical system of the TRU. This shows the aforementioned main elements of the refrigeration system 29 namely the evaporator 30, compressor 32, condenser 34 and expansion valve 36, in this example an electronic expansion valve (EEV) driven by an EEV driver 26a, although a thermal expansion valve may be used. The refrigerant 33, here in a preferred example a low GWP refrigerant, enters the compressor 32 at low temperature and low pressure in a gaseous state. Here, compression takes place to raise the temperature and refrigerant pressure. The refrigerant leaves the compressor 32 and enters the condenser 34. Since this process requires work, the compressor 32 must be driven, here by an electric motor 32a. The compressor 32 may be scroll, screw, centrifugal or reciprocating types. In the present example, the compressor 32 is a reciprocating type driven by an internal permanent magnet AC motor.

Plural compressors may be used. These may be arranged in a modular way, which may have advantages due to the fact that the power required to power a compressor at fixed speed changes throughout a pull-down. The compressors can be configured to vary the cooling power demand of the refrigeration system. The compressor or compressors may be used with optional liquid injection or economizer if required.

The condenser 34 acts as a heat exchanger. Heat is transferred from the refrigerant to a flow of fluid - here ambient air driven across the heat exchanger surface area by fans 34a, and so lost to the environment.

When the refrigerant 33 enters the expansion valve 36, it expands and releases pressure. Consequently, the temperature drops. Because of these changes, the refrigerant leaves the valve as a liquid vapor mixture. The expansion valve serves to maintain a pressure differential between low- and high-pressure sides, as well as controlling the amount of liquid refrigerant entering the evaporator 30.

At the stage of entering the evaporator 30, the refrigerant is at a lower temperature than its surroundings. Therefore, it evaporates and absorbs latent heat of vaporization from the air inside the trailer 12 which is circulated by fans 30a to cool the contents. Heat extraction from the air to the refrigerant happens at low pressure and temperature. Compressor 32 suction effect helps maintain the low pressure.

A liquid suction heat exchanger 37 may be installed between the condenser 34 and the expansion valve before entering the evaporator 30. This helps subcooling liquid before entering the EEV and superheating the gas before entering the compressor, which provides better control of the EEV and avoids liquid droplets entering the compressor. Optionally, an accumulator (not shown) is provided upstream of the compressor 32 to prevent liquid refrigerant from flooding back to the compressor 32. A liquid receiver 40 is also provided after the condenser 34 which acts as a storage vessel designed to hold excess refrigerant not in circulation. A pressure reduction valve (not shown) coupled to the liquid receiver 40 safely relieves pressure in case of overpressure. Various sensors 44 monitor temperature and pressure at various points in the cycle both of the refrigerant and ambient air. Further sensors may monitor the state of the various electrical elements.

The TRU 10 uses either an electric method to defrost the refrigerated compartment evaporator, or a reverse vapour compression cycle method, or a hot gas defrost method.

An electrical system 45 of power electronics is provided, the primary purpose of which is to supply electric power to drive the compressor and preferably the fans. The fixed batteries 50 and the swappable batteries 22 are connected to a bus 52. In the present example, the bus is provided within a DC power distribution unit in the TRU main body, which may further comprise fuses, contactors, and CAN I/O module for communications with the controller. In the present example, the batteries are 48VDC 10kWh capacity and the TRU may have 4 fixed battery modules and the battery racking system 20 may accommodate up to 6 batteries. However, it will be appreciated that different voltages, capacities or numbers of fixed and/or swappable batteries and or their positioning may be adopted. In some examples, the batteries may be fixed or all batteries may be swappable. The number of batteries can be adjusted on a per journey basis, as energy demand can change between customers, season and application.

Within the electrical system 45, the batteries are connected via the bus 52 to various power controllers 70,64,66 to manage delivery of power from the various power sources to the batteries and from the batteries and other sources to the power consuming devices (as described further below). These power controllers are generally referred to as the power management system 60 herein. It will be appreciated that in other examples, these functions may be consolidated in a power management system, e.g. into a so-called hybrid solar inverter of the sort known from the solar industry, rather than being provided by separate power controllers/components in the electrical system 45.

Each battery pack is connected to the DC bus via a contactor 51 (or a contactor for each of the positive and negative terminal) in a Battery Management System (BMS) fitted within the battery pack. A contactor is a heavy duty version of a relay (e.g. solid state or electromagnetic) used to switch power to/from the battery packs. This is controllable to individually connect the battery to the bus for charging/discharging. The system controller might provide high-level instructions (typically from the HMI or a signal received via the cloud platform) such as start refrigeration system, or start recharging via solar, in which case the contactors via the BMS are closed to enable battery packs.

Individual control of each battery pack is also enabled via the BMS. The BMS monitors the voltage, calculates State of Charge, State of Health and many other parameters. For instance, a battery may produce a voltage range of between 46V (when entirely discharged, i.e. 0% State of Charge) and 58V (when the battery is fully charged, i.e. 100% SoC). The BMS then communicates with the BMS of the other battery packs via the CAN bus in the PDU. Depending on the voltages of the other modules, and whether their contactors are engaged, a BMS determines if it should also engage its contactor. In particular, it will be appreciated that if batteries with dissimilar voltages are connected in parallel, there is a tendency if the difference is too great for one battery to feed energy into the other battery, as current flows from high potential to low. This can shorten battery life, blow fuses and lead to other undesirable effects. The BMSs cooperate to alleviate this by avoiding connecting batteries to the DC bus with dissimilar voltages, e.g. more than 5% higher or lower than each other.

In a first example, each battery may be used in turn to provide power to the compressor to avoid the situation where battery modules of dissimilar SoC and thus voltages across their terminals will be connected together to the DC bus. For instance, the controller may select the battery module with the highest SoC to initially provide power to the compressor and other power drawing components on the DC bus, and then move to the next battery when the first battery is discharged.

In a second example, one or more batteries with a relatively high SoC are selected to initially provide power. As those batteries discharge power, their voltages drop until they reach a similar voltage to at least one other battery pack which initially had a lower SoC, at which point, that battery pack is connected to the bus via the contactor so that those battery packs provide power jointly. So for instance, a first battery may initially have a 100% SoC and a second battery has an initial charge of 50% SoC. The first battery is selected first to supply power, until its charge falls to about 50%, at which point, the second battery module can be connected to the DC bus to provide power in combination with the first battery, and so on for any other battery packs.

This second example may be generally preferred, as it tends to distribute the load across all batteries, and thus extends their lifespan. However, there may be occasions where using some batteries in preference to others may be preferred.

A similar technique operates when charging the battery packs via solar and/or from mains power. In other words, power to charge the batteries is selectively applied to the batteries by activating the contactors such that batteries with unequal voltages/SoC are not connected in parallel at the same time.

The trailer preferably has one or more solar panels to provide power when in transit and/or when stationary. Where solar power is available, this can be used to power the compressor motor (in conjunction with battery power if solar is insufficient). If there is excess solar energy, the excess can be used to charge the batteries by selectively connecting the batteries to the DC bus via the contactors. Otherwise, the batteries can be left disconnected. Often solar can only cover part of the energy required, in which case batteries or the on board chargers (OBC) 66 (if plugged in via the grid connector) will provide the remaining. If no solar or OBC is available batteries will provide the energy.

Each solar panel is connected to a MPPT (Maximum Power Point Tracker) charge controller with bock-boost converter, which in turn is connected to the battery packs via the DC bus. the efficiency of power transfer from the solar cell depends on the amount of sunlight falling on the solar panels, the temperature of the solar panel and the electrical characteristics of the load. As these conditions vary, the load characteristic that gives the highest power transfer efficiency changes. The efficiency of the system is optimized when the load characteristic changes to keep the power transfer at highest efficiency (the maximum power point). MPPT is the process of finding this point and keeping the load characteristic there. Electrical circuits can be designed to present arbitrary loads to the photovoltaic cells and then convert the voltage, current, or frequency to suit other devices or systems, and MPPT solves the problem of choosing the best load to be presented to the cells in order to get the most usable power out. The bock-boost converter then bocks or boosts the voltage level for charging the batteries. Thus, for the scenario where the panel voltage is lower than the battery voltage, it steps up the voltage to be suitable for the battery requirements so it can charge, and similarly where the voltage is too great, it steps it down.

The grid connector may be single phase, with a on-board charger (OBC) to provide power at the appropriate DC voltage level to the DC bus. Alternatively, the connector may be 3 phase and have at least one on-board charger (OBC) 66 provided for each phase or a 3 phase charger. This allows high current to be generated, as the DC bus is low voltage, to allow maximum power efficiency in charging. The charger is bi-directional, so as to be capable of the reverse process, i.e. converting PV or battery DC power to AC for sharing power with other TRUs via the local grid or exporting surplus power to the wider power grid (described in more detail below).

The power distribution unit 60 may also have contactors for selectively supplying current to the fans and other components.

The battery packs are connected to the DC bus in a post-PDU architecture, meaning that each battery pack has its own contactor(s). This electrical architecture allows integration and management of battery packs with different states of charge. It will be appreciated that this is a particular benefit in a system where multiple battery packs are detachable, swappable and scalable, and different battery packs may have very dissimilar states of charge at various points in their operation. This is a problem that does not arise in, say, EV battery management, where the battery modules in a battery packs are typically combined and hardwired together in parallel, such that the overall capacity is fixed and the battery module charge is always at a mutually similar level. While it may be known for an EV battery packs to have a contactor, this is typically used only for connecting the overall battery pack to a load (or possibly for fault isolation of battery modules in a battery pack), rather than controlling individual battery packs in a system as in the present novel architecture.

The compressor 32 in this example is powered by an AC output voltage provided by the motor controller 70 which alters the frequency of the AC power so as to vary the speed of the motor and thus the compressor under control of the system controller. The output voltage is also selectively supplied to the fans 30a,34a of the evaporator 30 and condenser 34, e.g. via speed control on the fans via PWM.

The battery 22,50 and solar panel 16 can be used to provide power to the tractor unit itself, for example where the tractor unit runs on fuel cells or is powered by a diesel ICE. Thus, the PDU may have an output 11 to provide supplementary power to the tractor unit. This is beneficial as the solar power is cheaper than the electricity generated by a fuel cell, e.g. via a DC/DC converter. The PDU may also be able to receive supplementary power, e.g. from axle regeneration, from the tractor unit or trailer via an input for use in powering the compressor.

A system controller 75 is provided with communication links to the various parts of the TRU 10 to control and monitor the refrigeration process, i.e. to pull down and maintain a set point temperature, and to manage and monitor the various energy sources. Thus, the controller 75 communicates with the power converters 70, 64, 66 and the BMS/contactors of all the battery packs, to control the fans 301,34a, the compressor, the power provided by the PV panels and from the connector, the sensors 44 and voltage sensors, and any other elements of the TRU 10 in order to exchange data and send control signals.

The system controller 75 is connected to or incorporates a wireless gateway (e.g. 4G) 76 by which it can exchange data with software 120 running on a remote server or in the cloud 78, which is part of the overall system 5. This may be an "Internet of Things" (IoT) cloud service such as for example Azure IoT Central. Thus, the controller may be a so-called loT edge device. The controller may also be connected to or incorporate GPS for finding its location, and WiFi or Bluetooth or similar wireless signals for communicating with other external devices in the system.

A Human Machine Interface (HMI) is provided comprising a display and input means, e.g. a touch screen 80, connected with the system controller 75, e.g. by WiFi, by which an operator can locally see the status of the TRU and provide input/control.

Possibly inputs are one or more of:
- setting the temperature set-point
- setting the desired time for the TRU to be at set-point (using energy prediction). Options for this could be fastest possible or at set time in the future
- setting the TRU on/off

Possibly status data are one or more of:
- Current air temperatures inside/outside the trailer
- Energy flows around the electrical system 45
- Directions as to which batteries 22 to swap / add / remove
- Whether there is sufficient charge in the batteries 22, 50 for an upcoming journey.

The system controller 75 can also be controlled directly from the cloud by the software 120, so settings can also be adjusted remotely. The system controller 75, gateway 76, and HMI 80 may be powered by an uninterruptable power supply (UPS) 81 which is a battery, separate from the fixed and swappable batteries and typically smaller. This is useful, for instance, where the trailer is parked up without any load and with partially charged batteries, the sun starts shining, and the contactors to the fixed or swappable batteries must be closed to allow charging with solar power or export to the grid. The controller is therefore "always on" and can be controlled remotely from anywhere via the cloud platform to monitor the available solar energy and if sufficient, turn on battery charging or export of energy to the grid. The UPS battery typically has sufficient capacity to power the controller for 24 to 48 hours, and is recharged automatically when there is power on the DC bus.

The system 5 uses telematics and instrumentation specific for monitoring, including but not limited to, the electrical system 45 and refrigeration system 29 performance. Air temperature inside the trailer is automatically streamed and recorded and used to warn the driver and the fleet operator if temperatures move outside the desired range. All data is stored in the cloud and is used to teach a machine learning algorithm to create a digital twin of each TRU/trailer. The digital twin is subsequently stored in the cloud and is used to provide future energy prediction for each TRU/trailer and across the fleet.

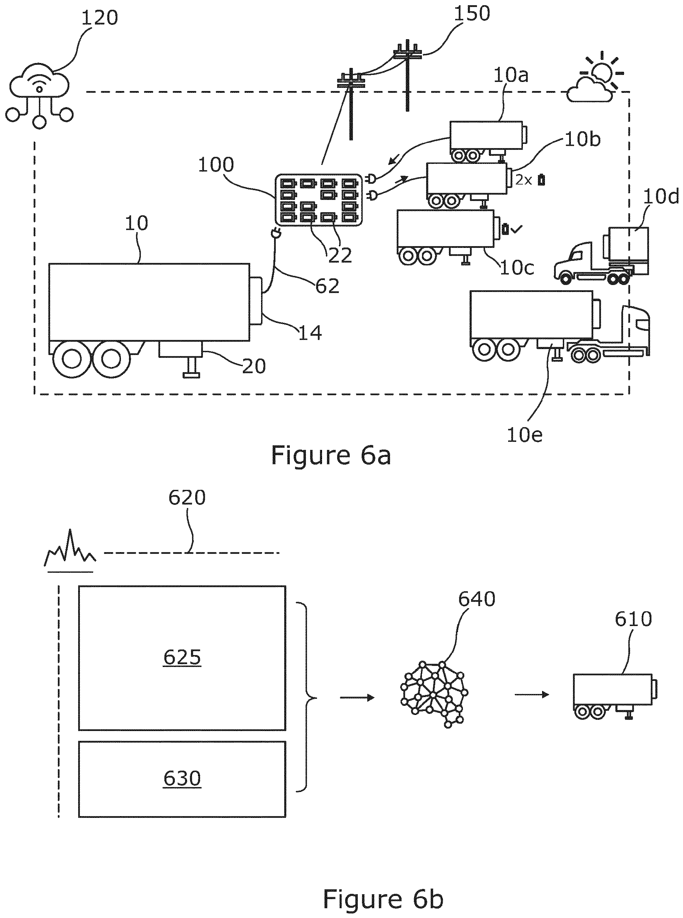

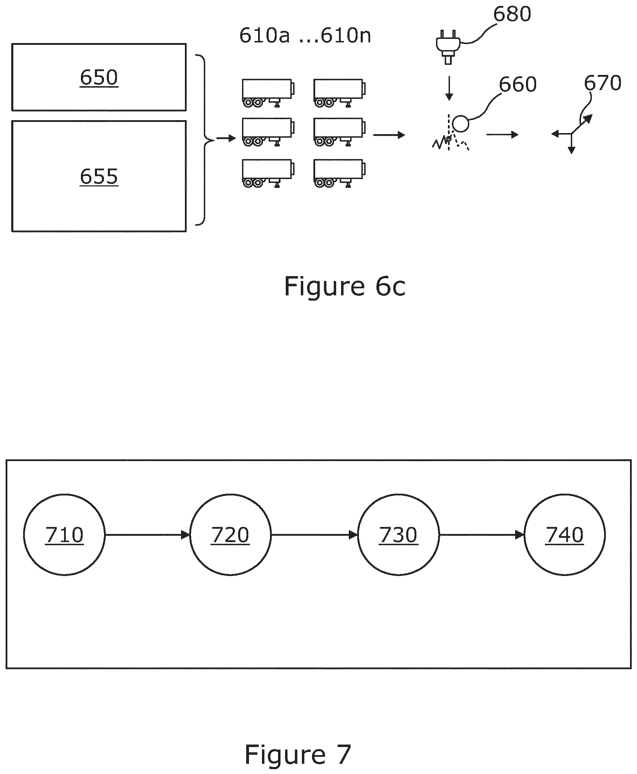

As shown by Figure 6, the system 5 comprises a fleet of trailers 12 and TRUs 14, and optionally at least one centralised static charging location, which in this example is a battery swapping station 100, e.g. located at the depot. The system 5 preferably uses plural batteries per TRU, the number and initial charge of which are configured by the software 120, here an IoT software platform running in the cloud 78 in conjunction with a machine learning algorithm that produces and updates digital twins. This enables the batteries 20, 50 to be small compared with prior art schemes, as the storage capacity can be adapted per journey. The software 120 manages batteries for the fleet of trailers and controls and monitors charging of the batteries at the charging location 100. In the present example, the battery swapping station is adapted to receive the removable batteries 22 when removed from the trailer for charging under the control/monitoring of the software. Alternatively or additionally, batteries 22 may be charged in situ under the control/monitoring of the software 120 by connecting the TRUs 14 to the local electricity system via their connectors 62. In this case, the removable batteries may be swapped directly between the trailers in the fleet rather than via a battery swapping station.

The static charging station is constantly connected to the grid (AC) 150 to charge the batteries via a charger, or to release surplus energy to the grid for demand side response, grid balancing or other grid connectivity. This is preferably a bi-directional charger (converts AC to DC one way, and inverts DC to AC the other way) as energy flows both ways. Such converters are known as "V2G" and "grid-tie" in other applications.

Figure 7 shows the main process carried out by the software. The software first predicts 710 the battery capacity for the journey. The software takes as input data representing a) the logistics schedule for the fleet, namely the desired temperature setting or profile for the goods being transported, the time and duration of the journey, the payload mass and/or type (i.e. a measure of how much is to be transported), and the number of delivery drops, b) the weather forecast and the hours of daylight of the journey, and c) the initial state of charge of the battery. Typically the itinerary for the journey is obtained from the operator's logistics software, but could be manually entered by the operator; the weather information is obtained from an online source; and the battery charge information is determined from the swapping station and or system controller 75 of the TRU 10 depending on the current location of the battery.

The software 120 then looks at the TRUs available and selects the one which best matches the requirements for the journey. The software predicts the battery capacity, i.e. energy, required to complete the journey for the best match according to the input parameters, in particular the logistics schedule and weather forecast. It will be appreciated that weather conditions and expected hours of daylight during the journey will influence how much energy is generated via solar during the journey. Ambient air temperature will affect the cooling required. The number of stops for unloading affects loss of cooling, which requires additional energy from the system to compensate for.

Once the energy required is predicted, in step 720, the software determines how many batteries are required for the journey and how much they need to be charged, taking into account the initial charge of the batteries and expected charging until the trailer must leave. Based on this, the closest match will then be charged according to the predicted energy requirement and/or the operator is instructed to swap, add or remove batteries to adapt the number of batteries if required and allow the operator to vary the on-vehicle battery capacity.

In particular, if the closest match needs another battery, the operator is instructed to add it. If the closest match has too many batteries on-board they may be removed as they can provide revenue via demand-side-response if they are left in the charging station at the depot. If there is time to charge 20kWh but only 10kWh is needed, the 10kWh may be sold to the national grid or used to charge another TRU in the fleet. Effectively, this means that the TRUs need not leave the depot with redundant battery capacity. Redundant battery capacity is better left at the depot to be used by another TRU or for demand-side-response.

In step 730, the batteries removed from a TRU 10 are moved to the charging station for offline charging or to another trailer. The software controls the charging of batteries in the battery swapping/charging station and/or in situ in connected TRUs.

In step 740, the trailer and TRU embarks with its adapted battery capacity.

Figure 6a shows a fleet of trailers 12/TRUs 10 with various statuses being managed by the software platform 120. In particular, Figure 6a shows a TRU 10a with excess energy capacity being sold to the grid, a TRU 10b that requires additional batteries and charging via grid 150 and/or solar to reach the predicted energy capacity, a TRU 10c that will depart soon which has the required number of batteries and is disconnected from the swapping station and is undergoing final solar charging, a TRU 10d arriving back at the depot having finished a journey, and a TRU 10e departing the depot on a journey. Various batteries are shown in the battery swapping station 100 charging.

Figure 6b shows a method of energy prediction in more detail. In this technique, a "digital twin" 610 is constructed to model each TRU 10 in the fleet. A digital twin is a digital representation that simulates virtually a real-life object, process or system. The digital twin comprises data in the form of physics-based mechanisms and models, relating to in particular the refrigerant cycle, heat loss from the trailer, etc; material properties and definitions of the system, such as characteristics of the trailer 12 and refrigeration system 29. The virtual representation of the twinned physical asset enables understanding of the behaviour of the physical object under various circumstances and in a variety of environmental conditions, so that its behaviour in the future can be predicted.

Thus, as described above, key usage metrics are continuously streamed from each TRU 10 to the cloud software 120. Data collected is linked to individual TRUs as each TRU will perform slightly differently from another. For instance, there may be different insulation thicknesses in different trailers, and/or damaged insulation on one trailer and not on another. There may be a TRU with a faulty/less efficient refrigeration cycle than another. A solar panel on one TRU may be damaged or dirty. Thus, preferably the digital twin is created for each TRU in the fleet, or at least different types of TRU/trailers if those in the fleet can be sub-divided into categories.

This streamed usage data creates historical data 620 of the performance of a TRU 10, i.e. the "response" of the system in terms of energy usage and temperature profile achieved, based on the "stimuli" to the system, i.e. the input data to the system as described above, i.e. the start time and duration of the trip, the desired temperature set-point, the prevailing weather conditions, the number, times, and durations of delivery drops, the payload capacity/utilisation, the location during the journey. This historical data is used to train the Digital Twin model via machine learning algorithms 640. The trained digital twin represents the digital behaviour blueprint of an individual TRU capturing the real-life response caused by indefinite combinations of stimuli at any given point in time.

Figure 6c shows in more detail the digital twin models 610 being used to predict energy usage for a TRU 10 and across the fleet 10a..10n. The software 120 continuously monitors the present state 650 of the individual TRUs 10. This includes GPS location and battery state of charge. The present state provides a first input to the model 610. Future stimuli 655 are also input into the model 610, including the logistics schedule, i.e. when the TRUs must depart, number of deliveries, set-point temperature, time and duration of trip; and the weather forecast, i.e. to estimate ambient temperatures and solar energy available for the PV panels. Based on these input parameters 650,655 to the digital twin model 610 in the loT software platform 120, the software can predict the energy required for a particular TRU to make the scheduled journey. Thus the data that is used to create the digital twin 610 using machine learning 640 which is then used to make predictions 660 for a specific TRU/journey and to manage the batteries across the fleet.

In particular, the model predicts 660 (i) how long it takes to pull down, (ii) how much energy is needed to pull down, (iii) how much energy is needed for a specific journey, which is used to generate one or more actions 670 to adjust the battery capacity and/or charging required. "Pull down" usually takes place ahead of loading goods, either starting at the depot or on the way to the first pickup. So by predicting how long it takes to pull-down the software 120 can match when the trailer 12 needs to be ready for the goods. This minimises the time when the empty trailer is cooled to the required temperature ahead of the first pickup. The temperature may be preferentially pulled down whilst connected to the grid so less battery charging/capacity is needed.

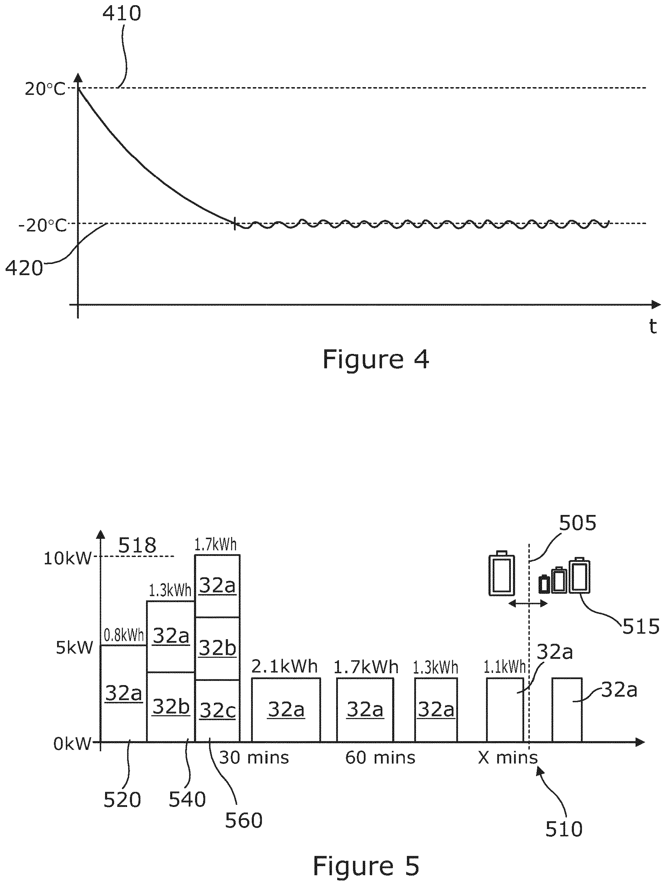

Figure 4 shows typical temperature profile over time when operating a TRU 10. Initially, the TRU "pulls down" temperature inside the trailer 12 from ambient temperature 410 to a desired set point temperature 420 as required by the goods when being transported. When the TRU 10 is started from an ambient temperature the refrigerant is dense and so the pressure of the refrigerant is high. At high pressures, compressors 32 require a lot of power, especially during start-up, due to the high inrush currents. For a typical set point of 5 degrees C or -20 degrees C, pull down from ambient temperature, say 20 degrees C, may take 30 minutes or more. Once the set point is reached, smaller energy output is required to keep the trailer at the desired temperature, depending again on ambient temperature and effectiveness of insulation of the trailer and resultant heat ingress.

The amount of energy required over time for a particular journey, for instance shown by Figure 5, is predicted using the energy prediction software 120 using the digital twin. It can be seen that the (in this example 10kWh) fixed battery 505 is sufficient for pulldown and maintaining the setpoint for an initial period of time 510. The adaptive battery capacity provided by the swappable batteries 515 is selected to provide sufficient energy to fulfil the total journey requirements, i.e. to move the line 515 along the axis such that the total battery capacity is adapted to the total journey time and requirements.

Returning to Figure 6c, the digital twin models 610 provide energy prediction 660 for the fleet. This comprises both what energy is available in the fleet (how much, where and when), and what energy is needed in the fleet (how much, where and when). Decisions are made by the software to balance the requirements, taking into account also the cost of electricity 680 and the potential profit from feeding energy back into the grid 150.

Finally, various actions are taken by the energy prediction software 120 based on the balancing calculation. As described, instructions can be issued to an operator to vary the number of swappable batteries 22 on the on-vehicle battery rack 20, based on expected consumption and hence the energy storage capacity. Unused batteries 22 are moved to the charging station 100 or other trailers 12 in the depot for offline charging under the control of the software so as to be ready for other upcoming journeys and/or participation in DSR services, i.e. the modification of consumer demand for energy and/or selling energy back to the national grid based on signals received from a utility company. The software controls charging and discharging of the connected batteries.

Referring again to Figure 6a, the software platform 120 and charging station 100 has the capacity to manage a fleet of TRUs. This provides the ability for multiple TRUs to communicate with each other and share energy through battery swapping and vehicle to grid (V2G) technology. Vehicle-to-grid (V2G) describes a system in which plug-in electric vehicles, such as battery electric vehicles (BEV), plug-in hybrids (PHEV) or hydrogen fuel cell electric vehicles (FCEV), communicate with the power grid to sell demand response services by returning electricity to the grid. The power distribution unit 60 in each TRU and/or the power management system in the battery swapping station may be connected to the local AC grid, and thence to the grid 150, to charge the batteries or to provide V2G functionality, i.e. via an on-board or off-board bidirectional charger. A smart energy meter is mounted on the on-vehicle electrical circuit and the static charging station electrical circuit to monitor energy usage from the refrigeration system and supply energy usage information to a server.

Plural TRUs may be connected together to become a "micro grid" and may be controlled through the software platform that uses energy prediction to instruct TRUs to either share energy (from solar or their batteries) with other TRUs (directly and/or via the battery swapping station), or charge their own battery depending on (i) photovoltaic power production (ii) grid electricity cost (iii) grid capacity, (v) demand from other TRUs or (vi) logistics schedule.

Returning to the example architecture of Figure 3, whilst a single compressor is used in this example, other arrangements are possible. As mentioned above, the compressors have a high power requirement during the initial pulldown phase. In embodiments where an inverter/motor controller is used to power the compressor motor, ordinarily, very large and expensive inverters would be needed to allow for sufficient peak power capacity to drive the compressors at start-up, as smaller units would be prone to failure. Various measures may be taken to mitigate this problem and avoid the need for large expensive inverters.

In a further example, a variable speed drive 70 is used under the control of the system controller 75 to modify the frequency of the AC power supplied from the inverter part of the power management system from the battery system 22,50 and/or solar panel system 16 to the AC motor of the compressor 32 at start up so that the power applied by the motor gradually ramps up during start up, keeping the power requirement within the safe capabilities of the motor controller. In this example, the compressor is a reciprocating type.

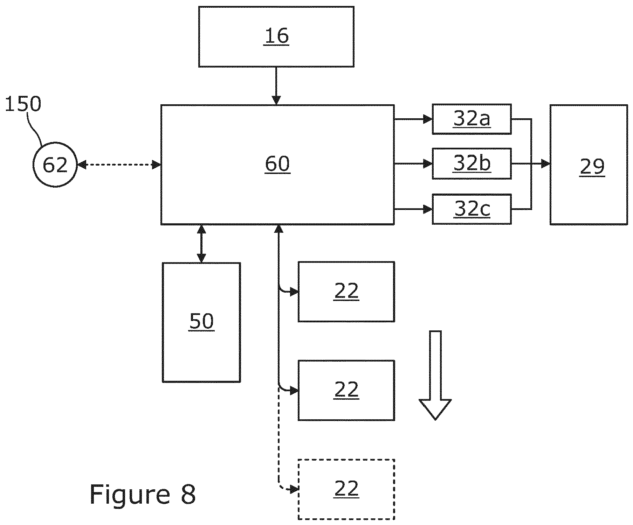

In another example, as shown by Figure 8, there is an initial single compressor 32a and one or more additional compressors 32b,32c may be added in parallel to the initial compressor. In this example, the compressor is a scroll type. The controller 75 (not specifically shown in Figure 8) is arranged to turn on one compressor 32a, and once the suction pressure as measured by a sensor 44 has dropped sufficiently, the next compressor 32b can be engaged, once the suction pressure has dropped further, the next compressor 32c can be engaged, and so on.

Thus, in the example in Figure 5, the electrical system 60 may be designed for a capacity of 10kW 518 with perhaps a maximum peak capacity of 12kW for short bursts. A first compressor is engaged at start up for approx. 10 minutes 520 requiring 5kW from the inverter consuming 0.8kWh, staying well within the inverter capacity. After approx. 10 minutes, with the refrigerant now less dense and the compressor requiring less power, a second compressor 32b is engaged. The combined compressors operate for 10 minutes 540 requiring 7.5kW from the inverter consuming 1.3kWh, staying within the inverter capacity. After another approx. 10 minutes, with the refrigerant less dense again, a third compressor 32c is engaged. The combined compressors 32a,b,c operate for approx. 10 minutes 560 requiring approx. 10kW from the inverter consuming 1.7kWh, staying at or around the inverter capacity.

Once the set point is reached, compressors can be disengaged and a single compressor 32a is operated for periods of time to maintain the set point temperature. Thus, the system of plural compressors reduces inrush start-up current and provides capacity modulation.

Embodiments of the present invention have been described with particular reference to the examples illustrated. However, it will be appreciated that variations and modifications may be made to the examples described within the scope of the present claims.

## Claims

1. A computer program (120) for managing power requirements of mobile refrigeration units (10), the refrigeration units being in use attached to a trailer or vehicle (12) to cool an interior space thereof during a journey and being powered by one or more rechargeable batteries (22) and optionally one or more solar panels (16), the computer program comprising processor readable instructions, which when executed by the processer cause the computer to:
receive at least an itinerary for an upcoming journey of the refrigeration unit and set point temperature to be achieved and maintained by the refrigeration unit for cooling the interior space for that journey;
model the energy requirements to achieve the set point temperature for the journey, and determine a battery charge level for the one or more batteries to provide that energy, wherein the computer program is arranged to receive historical usage data from refrigeration units during journeys, the data including said one or more parameters and data indicating the actual temperature achieved by the refrigeration units and energy consumption of the refrigeration units, which data is used to train Digital Twin models of the performance of respective individual refrigeration units via machine learning algorithms and wherein the model for the particular refrigeration unit that is making the upcoming journey is used in said determination of the battery charge level; and
in accordance with the determination, to output a control signal to the refrigeration unit to cause the required batteries to be charged to the required level.

2. The computer program according to claim 1, the inputs to the model on which the prediction of the energy requirements is made include one or more of the parameters:
Desired temperature set point;
Expected weather conditions during the journey;
Start time of journey;
Duration of journey;
Number, times and/or duration of delivery drops;
Payload mass and/or type;
And the determination takes into account the further input of the Initial state of charge of the batteries.

3. The computer program according to claim 1, wherein the computer program comprises plural digital twins modelling the energy required and the energy available across plural refrigeration units in a fleet of trailer or vehicles, the computer program being arranged to output control signals to optimise the charging of batteries across the fleet.

4. The computer program according to claim 3, wherein the computer program is arranged to output control signals to cause export of surplus electrical energy from a rechargeable battery or solar panel of a TRU to the national electricity grid, or to another rechargeable battery in another TRU charging on the local electricity grid.

5. The computer program according to claim 4, wherein the computer program determines energy to be surplus in accordance with the cost of mains electricity.

6. The computer program according to any of claims 3 to 5, wherein the modelling comprises tracking movement of all TRUs across the fleet so as to determine the current status of the units and predicting future status of the units including energy consumption by the refrigeration units, energy generation by the solar units and energy flows around the system.

7. The computer program according to any of claims 1 to 6, wherein solar is used preferentially to energy from the electricity grid to recharge batteries.

8. The computer program according to claim 2, wherein the computer program interfaces to a logistics program to get the itineraries for the journeys and/or to an online source of weather information.

9. A system (5) for charging rechargeable batteries (22) for powering mobile refrigeration units (10), the system comprising:
refrigeration units comprising one or more rechargeable batteries for powering the refrigeration units being in use attached to a trailer or vehicle to cool an interior space thereof during a journey;
a computer program (120) on a server remote (89) from the refrigeration units according to any of claims 1 to 8;
means for communicating between the remove server and the refrigeration units.

10. A refrigeration unit (10) for cooling the interior of a trailer or vehicle (12), the unit comprising:
a refrigerating system (29) for mounting to the trailer or vehicle, including a compressor (32), an evaporator (30), a condenser (34), an expansion valve (36), and controller, arranged such that activation of the compressor causes refrigerant to circulate and remove heat from the interior via the evaporator and emit heat to the environment via the condenser;
a battery rack (20) in which are received plural rechargeable batteries (22) so they are swappable into and out of the rack for the battery capacity to be made adaptive to a particular journey; and
a power management system (60) arranged to receive DC power from the plural batteries and deliver power to the compressor, wherein each of the plural rechargeable batteries is selectively electrically connectable via a contactor (51) to a DC bus (52) of the power management system for delivering power or drawing power for recharging the battery such that batteries with dissimilar voltages are not connected in parallel;
a wireless gateway (76) arranged to receive control signals from a remote software platform for charging the batteries according to a computer program of claim 1; and
a controller (75) arranged to control the refrigeration system to cool the interior to a predetermined temperature.

11. The unit of claim 10, wherein the swappable battery is pluggable electrically to a connector of the power management system when it is received in the rack.

12. The unit of any of claims 10 or 11, comprising at least one solar panel (16) for mounting to the trailer or vehicle, the power management system being arranged to receive DC power from the solar panel for powering the compressor and charging the batteries.

13. The unit of any of claims 10 to 12, wherein the unit has a connector (62) for connecting to a local or national electricity grid, wherein electric power from the solar panel or battery may be selectively exported to the connected electricity grid and/or the battery may be selectively charged from the connected electricity grid.

14. The unit of any of claims 10 to 13, wherein the unit is arranged to export energy to and/or from the tractor unit.

15. The unit of any of claims 10 to 14, arranged to monitor usage data of the unit, and comprising communication means to stream the data to a remote software platform, the usage data comprising one or more of:
Start time of journey;
Duration of journey;
Temperature set point;
Weather during journey;
Number, times and/or duration of delivery drops;
Payload mass and/or type;
Location data;
Energy usage; and
Actual temperature profile.

## Patentansprüche

1. Computerprogramm (120) zum Verwalten des Energiebedarfs mobiler Kühleinheiten (10), wobei die Kühleinheiten im Einsatz an einem Anhänger oder Fahrzeug (12) angebracht sind, um einen Innenraum davon während einer Fahrt zu kühlen, und durch eine oder mehrere wiederaufladbare Batterien (22) und optional ein oder mehrere Solarpaneele (16) mit Energie versorgt werden, wobei das Computerprogramm prozessorlesbare Anweisungen umfasst, die bewirken, wenn sie von dem Prozessor ausgeführt werden, dass der Computer:
mindestens einen Fahrplan für eine bevorstehende Fahrt der Kühleinheit und eine Soll-Temperatur, die von der Kühleinheit zur Kühlung des Innenraums für diese Fahrt erreicht und aufrechterhalten werden soll, empfängt;
den Energiebedarf zum Erreichen der Soll-Temperatur für die Fahrt modelliert und einen Batterieladezustand für die eine oder mehrere Batterien bestimmt, um diese Energie bereitzustellen, wobei das Computerprogramm dazu eingerichtet ist, historische Nutzungsdaten von Kühleinheiten während der Fahrten zu empfangen, wobei die Daten den einen oder die mehreren Parameter und Daten enthalten, die die von den Kühleinheiten erreichte Ist-Temperatur und den Energieverbrauch der Kühleinheiten angeben, wobei diese Daten verwendet werden, um digitale Zwillingsmodelle der Leistung der jeweiligen einzelnen Kühleinheiten über Algorithmen des maschinellen Lernens zu trainieren, und wobei das Modell für die bestimmte Kühleinheit, die die bevorstehende Fahrt unternimmt, bei der Bestimmung des Batterieladezustands verwendet wird; und
entsprechend der Bestimmung ein Steuersignal an die Kühleinheit ausgibt, um zu bewirken, dass die erforderlichen Batterien auf den erforderlichen Stand aufgeladen werden.

2. Computerprogramm nach Anspruch 1, wobei die Eingaben in das Modell, auf dessen Grundlage die Vorhersage des Energiebedarfs vorgenommen wird, einen oder mehrere der Parameter enthalten:
gewünschter Temperatur-Sollwert;
erwartete Wetterbedingungen während der Fahrt;
Startzeit der Fahrt;
Dauer der Fahrt;
Anzahl, Zeiten und/oder Dauer der Auslieferungen;
Nutzlastmasse und/oder -typ;
und die Bestimmung die weitere Eingabe des Anfangsladezustands der Batterien berücksichtigt.

3. Computerprogramm nach Anspruch 1, wobei das Computerprogramm mehrere digitale Zwillinge umfasst, die die erforderliche Energie und die verfügbare Energie über mehrere Kühleinheiten in einer Flotte von Anhängern oder Fahrzeugen hinweg modellieren, wobei das Computerprogramm dazu eingerichtet ist, Steuersignale auszugeben, um das Laden der Batterien über die gesamten Flotte hinweg zu optimieren.

4. Computerprogramm nach Anspruch 3, wobei das Computerprogramm dazu eingerichtet ist, Steuersignale auszugeben, um den Export von überschüssiger elektrischer Energie von einer wiederaufladbaren Batterie oder einem Solarpaneel einer TRU in das nationale Stromnetz oder zu einer anderen wiederaufladbaren Batterie in einer anderen TRU, die am lokalen Stromnetz auflädt, zu bewirken.

5. Computerprogramm nach Anspruch 4, wobei das Computerprogramm die Energie, die überschüssig ist, entsprechend den Kosten für Netzstrom bestimmt.

6. Computerprogramm nach einem der Ansprüche 3 bis 5, wobei die Modellierung die Verfolgung der Bewegung aller TRUs über die gesamte Flotte hinweg umfasst, um den aktuellen Status der Einheiten zu bestimmen und den zukünftigen Status der Einheiten, einschließlich des Energieverbrauchs der Kühleinheiten, der Energieerzeugung durch die Solareinheiten und der Energieflüsse rund um das System vorherzusagen.

7. Computerprogramm nach einem der Ansprüche 1 bis 6, wobei die Solarenergie bevorzugt gegenüber der Energie aus dem Stromnetz zum Aufladen der Batterien verwendet wird.

8. Computerprogramm nach Anspruch 2, wobei das Computerprogramm über eine Schnittstelle mit einem Logistikprogramm, um die Fahrpläne für die Fahrten zu erhalten, und/oder mit einer Online-Quelle für Wetterinformationen verbunden ist.

9. System (5) zum Aufladen von wiederaufladbaren Batterien (22) zur Energieversorgung von mobilen Kühleinheiten (10), wobei das System umfasst:
Kühleinheiten, die eine oder mehrere wiederaufladbare Batterien zur Energieversorgung der Kühleinheiten umfasst, die im Einsatz an einem Anhänger oder Fahrzeug angebracht sind, um einen Innenraum davon während einer Fahrt zu kühlen;
ein Computerprogramm (120) auf einem von den Kühleinheiten entfernt liegenden Server (89) nach einem der Ansprüche 1 bis 8;
Mittel zum Kommunizieren zwischen dem entfernt liegenden Server und den Kühleinheiten.

10. Kühleinheit (10) zum Kühlen des Innenraums eines Anhängers oder Fahrzeugs (12), wobei die Einheit umfasst:
ein Kühlsystem (29) zur Montage an dem Anhänger oder Fahrzeug, mit einem Kompressor (32), einem Verdampfer (30), einem Kondensator (34), einem Expansionsventil (36) und einer Steuerung, das derart eingerichtet ist, dass die Aktivierung des Kompressors bewirkt, dass Kühlmittel zirkuliert und Wärme aus dem Innenraum über den Verdampfer abführt und Wärme über den Kondensator an die Umgebung abstrahlt;
ein Batterie-Ablagegestell (20), in dem mehrere wiederaufladbare Batterien (22) so aufgenommen sind, dass sie in das Ablagegestell ein- und aus diesem heraus auswechselbar sind, damit die Batteriekapazität an eine bestimmte Fahrt angepasst werden kann; und
ein Energieverwaltungssystem (60), das dazu eingerichtet ist, Gleichstrom von den mehreren Batterien zu empfangen und Strom an den Kompressor zu liefern, wobei jede der mehreren wiederaufladbaren Batterien über einen Schütz (51) selektiv mit einem Gleichstrombus (52) des Energieverwaltungssystems elektrisch verbunden werden kann, um Strom zu liefern oder Strom zum Wiederaufladen der Batterie zu entnehmen, derart, dass Batterien mit unterschiedlichen Spannungen nicht parallel geschaltet werden;
ein drahtloses Gateway (76), das dazu eingerichtet ist, Steuersignale von einer entfernten Softwareplattform zum Aufladen der Batterien gemäß einem Computerprogramm nach Anspruch 1 zu empfangen; und
eine Steuerung (75), die dazu eingerichtet ist, das Kühlsystem zu steuern, um den Innenraum auf eine vorbestimmte Temperatur zu kühlen.

11. Einheit nach Anspruch 10, wobei die austauschbare Batterie elektrisch mit einem Steckverbinder des Energieverwaltungssystems steckbar ist, wenn sie in dem Gestell aufgenommen ist.

12. Einheit nach einem der Ansprüche 10 oder 11, umfassend mindestens ein Solarpaneel (16) zur Montage an dem Anhänger oder Fahrzeug, wobei das Energieverwaltungssystem dazu eingerichtet ist, Gleichstrom von dem Solarpaneel zu empfangen, um den Kompressor mit Energie zu versorgen und die Batterien aufzuladen.

13. Einheit nach einem der Ansprüche 10 bis 12, wobei die Einheit einen Steckverbinder (62) zum Anschließen an ein lokales oder nationales Stromnetz aufweist, wobei elektrische Energie von dem Solarpaneel oder der Batterie selektiv in das angeschlossene Stromnetz exportiert werden kann und/oder die Batterie selektiv von dem angeschlossenen Stromnetz aufgeladen werden kann.

14. Einheit nach einem der Ansprüche 10 bis 13, wobei die Einheit dazu eingerichtet ist, Energie zu und/oder von der Zugmaschine zu exportieren.

15. Einheit nach einem der Ansprüche 10 bis 14, die dazu angeordnet ist, Nutzungsdaten der Einheit zu überwachen, und Kommunikationsmittel umfasst, um die Daten an eine entfernt liegende Softwareplattform zu streamen, wobei die Nutzungsdaten eines oder mehrere umfassen von:
Startzeit der Fahrt;
Dauer der Fahrt;
Temperatursollwert;
Wetter während der Fahrt;
Anzahl, Zeiten und/oder Dauer von Auslieferungen;
Nutzlastmasse und/oder -typ;
Standortdaten;
Energieverbrauch; und
Ist-Temperaturprofil.

## Revendications

1. Programme informatique (120) destiné à gérer les besoins en énergie d'unités (10) de réfrigération mobiles, les unités de réfrigération étant utilisées fixées à une remorque ou à un véhicule (12) pour refroidir un espace intérieur de celui-ci pendant un trajet et étant alimentées par une ou plusieurs batteries rechargeables (22) et facultativement un ou plusieurs panneaux solaires (16), le programme informatique comprenant des instructions lisibles par processeur, qui, lorsqu'elles sont exécutées par le processeur, amènent l'ordinateur à :
recevoir au moins un itinéraire pour un prochain voyage de l'unité de réfrigération et la température de consigne à atteindre et à maintenir par l'unité de réfrigération pour refroidir l'espace intérieur pour ce voyage ;
modéliser les besoins en énergie pour atteindre la température de consigne pour le trajet, et déterminer un niveau de charge de batterie des une ou plusieurs batteries pour fournir cette énergie, le programme informatique étant conçu pour recevoir des données d'utilisation historiques en provenance des unités de réfrigération pendant les trajets, les données comprenant lesdits un ou plusieurs paramètres et des données indiquant la température réelle atteinte par les unités de réfrigération et la consommation d'énergie des unités de réfrigération, lesquelles données sont utilisées pour entraîner des modèles de jumeaux numériques des performances des unités de réfrigération individuelles respectives via des algorithmes d'apprentissage automatique et dans lequel le modèle destiné à l'unité de réfrigération particulière qui effectue le prochain trajet est utilisé dans ladite détermination du niveau de charge de batterie ; et
conformément à la détermination, à délivrer en sortie un signal de commande à l'unité de réfrigération pour amener les batteries requises à être chargées au niveau requis.

2. Programme informatique selon la revendication 1, les entrées du modèle sur lequel la prédiction des besoins en énergie est effectuée comprennent un ou plusieurs des paramètres :
Point de consigne de température souhaité ;
Conditions météorologiques prévues pendant le voyage ;
Heure de début du voyage ;
Durée du voyage ;
Nombre, heures et/ou durée des livraisons ;
Masse et/ou type de charge utile ;
Et la détermination prend en compte l'entrée supplémentaire de l'état de charge initial des batteries.

3. Programme informatique selon la revendication 1, le programme informatique comprenant plusieurs jumeaux numériques modélisant l'énergie requise et l'énergie disponible à travers plusieurs unités de réfrigération dans un parc de remorques ou de véhicules, le programme informatique étant conçu pour délivrer en sortie des signaux de commande pour optimiser la charge des batteries à travers le parc.

4. Programme informatique selon la revendication 3, le programme informatique étant conçu pour délivrer en sortie des signaux de commande pour provoquer l'exportation de l'énergie électrique excédentaire d'une batterie rechargeable ou d'un panneau solaire d'une unité de réfrigération de transport (TRU) vers le réseau de distribution électrique national, ou vers une autre batterie rechargeable dans une autre TRU se chargeant sur le réseau de distribution électrique local.

5. Programme informatique selon la revendication 4, le programme informatique déterminant l'énergie excédentaire en fonction du coût de l'électricité du réseau.

6. Le programme informatique selon l'une quelconque des revendications 3 à 5, dans lequel la modélisation comprend le suivi du déplacement de toutes les TRU à travers le parc afin de déterminer l'état actuel des unités et la prédiction de l'état futur des unités, y compris la consommation d'énergie par les unités de réfrigération, la production d'énergie par les unités solaires et les flux d'énergie au sein du système.

7. Programme informatique selon l'une quelconque des revendications 1 à 6, dans lequel l'énergie solaire est utilisée de préférence à l'énergie provenant du réseau de distribution électrique pour recharger les batteries.

8. Programme informatique selon la revendication 2, le programme informatique s'interfaçant avec un programme logistique pour obtenir les itinéraires des trajets et/ou avec une source en ligne d'informations météorologiques.

9. Système (5) destiné à charger des batteries rechargeables (22) destinées à alimenter des unités de réfrigération mobiles (10), le système comprenant :
des unités de réfrigération comprenant une ou plusieurs batteries rechargeables destinées à alimenter les unités de réfrigération en cours d'utilisation, fixées à une remorque ou à un véhicule, pour refroidir un espace intérieur de celui-ci pendant un trajet ;
un programme informatique (120) sur un serveur distant (89) des unités de réfrigération selon l'une quelconque des revendications 1 à 8 ;
des moyens de communication entre le serveur distant et les unités de réfrigération.

10. Unité de réfrigération (10) destinée à refroidir l'intérieur d'une remorque ou d'un véhicule (12), l'unité comprenant :
un système de réfrigération (29) destiné à être monté sur la remorque ou le véhicule, comprenant un compresseur (32), un évaporateur (30), un condenseur (34), un détendeur (36) et un dispositif de commande, agencés de sorte que l'activation du compresseur provoque la circulation de fluide frigorigène et l'extraction de la chaleur depuis l'intérieur par l'intermédiaire de l'évaporateur et l'émission de chaleur vers l'environnement par l'intermédiaire du condenseur ;
une baie de batterie (20) dans laquelle sont reçues une pluralité de batteries rechargeables (22) de sorte qu'elles sont interchangeables vis-à-vis de la baie afin que la capacité de batterie puisse être adaptée à un trajet particulier ; et
un système (60) de gestion de l'alimentation agencé pour recevoir la puissance en courant continu de la pluralité de batteries et fournir la puissance au compresseur, chacune de la pluralité de batteries rechargeables pouvant être connectée électriquement de manière sélective par l'intermédiaire d'un contacteur (51) à un bus (52) en courant continu du système de gestion de l'alimentation pour fournir le courant ou prélever le courant afin de recharger la batterie de sorte que les batteries avec des tensions différentes ne soient pas montées en parallèle ;
une passerelle sans fil (76) agencée pour recevoir des signaux de commande d'une plate-forme logicielle distante pour charger les batteries conformément à un programme informatique de la revendication 1 ; et
un dispositif de commande (75) agencé pour commander le système de réfrigération afin de refroidir l'intérieur à une température prédéterminée.

11. Unité selon la revendication 10, dans laquelle la batterie interchangeable est électriquement enfichable avec un connecteur du système de gestion de l'alimentation lorsqu'elle est reçue dans la baie.

12. Unité selon l'une quelconque des revendications 10 ou 11, comprenant au moins un panneau solaire (16) destiné à être monté sur la remorque ou le véhicule, le système de gestion de l'alimentation étant agencé pour recevoir la puissance en courant continu du panneau solaire afin d'alimenter le compresseur et de charger les batteries.

13. Unité selon l'une quelconque des revendications 10 à 12, l'unité comprenant un connecteur (62) pour le raccordement à un réseau de distribution électrique local ou national, dans laquelle l'énergie électrique provenant du panneau solaire ou de la batterie peut être exportée de manière sélective vers le réseau de distribution électrique raccordé et/ou la batterie peut être chargée de manière sélective à partir du réseau de distribution électrique raccordé.

14. Unité selon l'une quelconque des revendications 10 à 13, l'unité étant agencée pour exporter de l'énergie vers et/ou depuis le tracteur routier.

15. Unité selon l'une quelconque des revendications 10 à 14, agencée pour surveiller les données d'utilisation de l'unité, et comprenant des moyens de communication pour transmettre les données en continu à une plate-forme logicielle distante, les données d'utilisation comprenant un ou plusieurs parmi :
Heure de début du trajet ;
Durée du trajet ;
Point de consigne de température ;
Conditions météorologiques pendant le trajet ;
Nombre, heures et/ou durée des livraisons ;
Masse et/ou type de charge utile ;
Données de localisation ;
Consommation d'énergie ; et
Profil de température réel.
